(19) Europäisches Patentamt
European Patent Office
Office européen des brevets

(11) Veröffentlichungsnummer: **0 448 741 A1**

# (12) EUROPÄISCHE PATENTANMELDUNG

(21) Anmeldenummer: **90105693.7**

(51) Int. Cl.5: **C08F 220/30**, C08F 220/58

(22) Anmeldetag: **26.03.90**

(43) Veröffentlichungstag der Anmeldung: **02.10.91 Patentblatt 91/40**

(84) Benannte Vertragsstaaten: **AT BE CH ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Rehmer, Gerd, Dr.**
**Königsberger Strasse 1**
**W-6711 Beindersheim(DE)**
Erfinder: **Boettcher, Andreas, Dr.**
**Konrad-Adenauer-Ring 38**
**W-6907 Nussloch(DE)**
Erfinder: **Auchter, Gerhard, Dr.**
**Paray-le-Monial Strasse 10**
**W-6702 Bad Duerkheim(DE)**

## (54) UV-vernetzbare Massen auf Basis von (Meth)-acrylesterpolymerisaten.

(57) UV-vernetzbare Massen auf Basis von (Meth)-acrylestercopolymerisaten mit einpolymerisierten Monomeren der allgemeinen Formel I

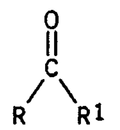

(I)

worin R für einen bestimmten Alkylrest, für einen Arylrest oder den Rest $R^1$ steht und $R^1$ für den Rest

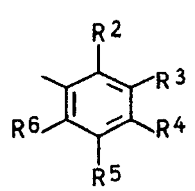

steht, wobei die Reste $R^2$ bis $R^6$ stehen für H, Alkyl, eine nicht orthoständige OH-Gruppe, $OCH_3$, $OC_2H_5$, SH, $SCH_3$, Cl, F, CN, COOH, COO($C_1$ bis $C_3$-Alkyl), $CF_3$, $N(CH_3)_2$, $N(C_2H_5)_2$, $N(CH_3)C_6H_5$, $^{\oplus}N(CH_3)_3X^{\ominus}$, $^{\oplus}N(CH_3)_2X^{\ominus}$, mit $X^{\ominus}$ einem Säureanion und mindestens einer der Reste $R^2$ bis $R^6$ für den Rest

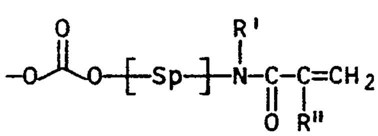

oder

EP 0 448 741 A1

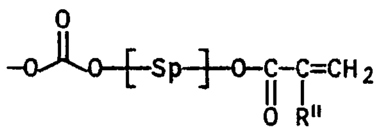

oder

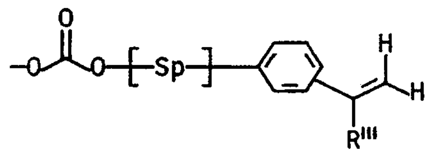

mit Sp für eine der Spacergruppen der folgenden Art

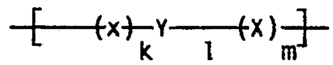

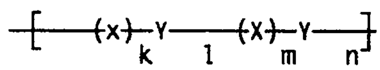

und
R', R'' sowie R''' für H oder einen bestimmten Kohlenwasserstoff stehen und worin X für einen zweiwertigen Alkylenrest, für einen Cycloalkylenrest, für einen Phenylenrest, wobei die X-Reste gleich oder verschieden voneinander sein können, die direkt miteinander verknüpft und/oder durch gleiche oder voneinander verschiedene Gruppen Y miteinander verknüpft sind und Y für einen zweiwertigen Rest aus der Gruppe

$-O-$ , $-S-$ , 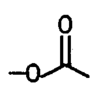 , 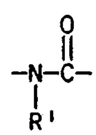 , 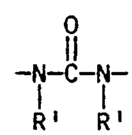 , 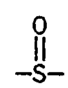 ,

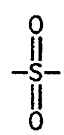 ,

und

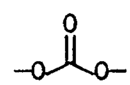

steht, und
k, m die Zahlen 1 bis 10 und
l, n die Zahlen 0 bis 25 symbolisieren.

Ziel der vorliegenden Erfindung sind mit UV-Licht an der Luft vernetzbare Massen, die insbesondere als Schmelzhaftkleber, zur Beschichtung von mineralischen Substraten, z.B. Dachziegeln, und als Lacke verwendet werden können. Die Massen sollen erhöhte Reaktivität gegen UV-Strahlen haben. Bei der Verwendung als Schmelzhaftkleber sollen die Produkte geringe Schmelzviskosität, gute Klebrigkeit und eine erhöhte Wärmestandfestigkeit aufweisen.

Aus der NL-Patentschrift 6 601 711 sind schon Haftklebebänder bekannt, die durch Überziehen eines flächigen Substrates mit einem Polyacrylatkleber hergestellt sind, wobei mindestens ein monomerer Acrylsäureester, z.B. 2-Ethylhexylacrylat, mitverwendet und durch UV-Bestrahlung und anschließendes Erhitzen polymerisiert wird. Um dabei jedoch brauchbare Ergebnisse zu erzielen, muß unter Inertgasatmosphäre belichtet werden. Außerdem ist die Mitverwendung der gegebenenfalls haut- und augenreizenden leichtflüchtigen Acrylester von Nachteil.

Aus der US-Patentschrift 3 661 618 ist zudem ein Verfahren zur Herstellung von Klebstoffen bekannt, bei dem Gemische aus Acryl- und Methacrylsäureestern, wie 2-Ethylhexylacrylat, mit organischen Polymeren, wie Cellulosederivaten, Polyolefinen oder Polyestern als Viskositätsregulatoren und ggf. zusammen mit einem Tackifier, wie Polyvinylmethylether, in dünner Schicht auf ein flächiges Substrat aufgebracht und mit energiereicher Strahlung behandelt werden. Auch hierbei ist die Mitverwendung der monomeren (Meth)-acrylester, die reizend wirken und leicht flüchtig sind, von Nachteil, und man erhält zudem nur Produkte, deren Kohäsion für viele Anwendungen auf dem Haftklebergebiet nicht ausreicht.

Bei dem Verfahren der DE-OS 23 57 486 zur Herstellung selbsthaftender Überzüge wird mit ionisierenden Strahlen bestrahlt, und zwar ein bei Raumtemperatur flüssiges Gemisch aus

(A) einem monoolefinisch ungesättigten Monomeren, das bei Raumtemperatur klebrige Polymerisate bildet,

(B) einer mindestens zweifach olefinisch ungesättigten Verbindung,

(C) einem Polymeren eines Erreichungspunktes unter 50 °C und eines durchschnittlichen Molekulargewichtes zwischen 500 und 10.000 und

(D) einem üblichen Photoinitiator, z.B. Benzoin, Acetophenon oder Benzophenon,

das gleichfalls auf ein flächiges Substrat aufgebracht ist. Auch bei diesem Verfahren können als Monomere (A) Acryl- und Methacrylsäureester von 4 bis 12 C-Atome enthaltenden Alkanolen eingesetzt werden. Die nach diesem Verfahren hergestellten Klebeschichten weisen zwar hohe Scherfestigkeit bei Raumtemperatur und gute Oberflächenklebrigkeit auf, zeigen aber verhältnismäßig starken kalten Fluß und bei erhöhten Temperaturen ungenügende Scherfestigkeiten.

Mit energiereicher Strahlung wird auch bei dem Verfahren der australischen Patentschrift 563 029 gearbeitet, bei dem selbsthaftende Überzüge unter Beschichten von Trägermaterialien mit Derivaten von Dihydroxipropylacrylsäureestern im Gemisch mit Polymeren einer Glastemperatur unter 0 °C und eines K-Wertes von 20 bis 80 und/oder einem klebrigmachenden Harz erhalten werden. Hierbei werden zwar gute Oberflächenklebrigkeiten und gute Wärmestandfestigkeiten erzielt, doch treten durch die reizend wirkenden Monomeren und das erforderliche Arbeiten unter Inertgasatmosphäre Nachteile auf.

Da bei Massen, die mit UV-Strahlen vernetzt werden sollen, Photoinitiatoren mitverwendet werden, sollen diese möglichst in den Massen gut löslich sein und aus den Massen nicht ausschwitzen, so daß die Massen auch bei erhöhter Temperatur verarbeitet werden können. Auch sollen diese Photoinitiatoren beim Bestrahlen keine zum Ausschwitzen neigende Abbauprodukte mit starkem Eigengeruch bilden.

Man hat daher auch schon einpolymerisierbare Photoinitiatoren in UV-härtbaren Massen mitverwendet. So werden in der EP-A-0 017 364 z.B. Copolymerisate beschrieben, die u.a. als Klebstoffe und für Dichtungsmassen geeignet sind, und die 0,1 bis 10 Gew.% Allylbenzoylbenzoat als Photoinitiator einpolymerisiert enthalten. Diese Massen lassen sich zwar mit UV-Strahlen vernetzen, ergeben jedoch vernetzte Produkte mit sehr hoher Viskosität. Außerdem ist ihre Reaktivität gegenüber UV-Strahlen zu gering, und damit hergestellte haftklebrige Schichten erfüllen nicht die Anforderungen, die an einen guten Haftkleber gestellt werden. Ferner werden bei diesem Verfahren (Beispiel 10) zusätzlich reizende Monomere mitverwendet.

Nach der Lehre der DE-OS 24 11 169 (≙ US Ser. No. 339 593) können mit ultraviolett-Strahlen vernetzbare Haftklebstoffe hergestellt werden, indem man Copolymerisate aus (Meth)acrylestern einsetzt, die monoolefinisch ungesättigte Ether- und Ester-Derivate von substituierten Benzophenonen als Photoinitiatoren einpolymerisiert enthalten. Die dabei einpolymerisierten Benzophenon-Derivate sind jedoch gegenüber UV-Strahlen wenig reaktiv und die aus den Copolymerisaten hergestellten druckempfindlichen Klebstoffe genügen hohen Anforderungen nicht. Außerdem zeigen danach hergestellte Schmelzklebstoffe eine zu hohe Schmelzviskosität, die ihrem praktischen Einsatz im Wege steht.

In der US-Patentschrift 4,144,157 wird ein Verfahren zur Herstellung von mit vorwiegend Acrylsäureester enthaltenden, vernetzten Copolymerisaten selbstklebend ausgerüsteteten Produkten beansprucht, das

dadurch gekennzeichnet ist, daß bei der Herstellung der selbstklebenden Polymerisate in diese 0,01 bis 5 Gew.-% eines Acrylsäure- oder Methacrylsäure-2-alkoxy-2-phenyl-2-benzoyl-ethyl-esters einpolymerisiert werden und diese nach dem Aufbringen auf ein Trägermaterial durch kurzzeitige Bestrahlung mit ultraviolettem Licht vernetzt werden. Ein Nachteil dieser Photoinitiatoren ist ihre geringe Reaktivität und Effizienz.

Auch aus der US-Patentschrift 4 737 559 sind mit UV-Strahlen vernetzbare Haftklebstoffe auf Basis von Polyacrylaten bekannt, die als Photoinitiatoren monoolefinisch ungesättigte Benzophenon-Derivate einpolymerisiert enthalten. Diese Haftklebstoffe sollen auf dem medizinischen Gebiet, z.B. für Pflaster, eingesetzt werden und ihre Adhäsion zur Haut soll im Laufe der Zeit nicht zunehmen. Ein Nachteil dieser Haftklebstoffe ist jedoch darin zu sehen, daß sie gegenüber UV-Strahlen nur eine geringe Reaktivität und vergleichsweise hohe Schmelzviskosität besitzen.

Es wurde nun gefunden, daß UV-vernetzbare Massen auf Basis von (Meth)-acrylestercopolymerisaten eines K-Wertes von 10 bis 150 besonders vorteilhaft sind, wenn sie einen Gehalt von 0,01 bis 20 Gew.-%, bezogen auf die Copolymerisate, an einpolymerisierten Monomeren der allgemeinen Formel I

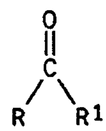 (I)

aufweisen, worin

R für einen geradkettigen Alkylrest mit 1 bis 3 Kohlenstoffatomen, einen verzweigten, gegebenenfalls substituierten Alkylrest mit 3 oder 4 Kohlenstoffatomen, für einen Arylrest oder den Rest $R^1$ steht und

$R^1$ für den Rest

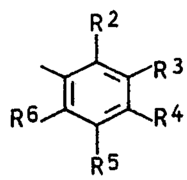

steht, wobei die Reste $R^2$ bis $R^6$ untereinander gleich oder verschieden sind und stehen, für H, Alkyl mit 1 bis 4 Kohlenstoffatomen, eine nicht orthoständige OH-Gruppe, $OCH_3$, $OC_2H_5$, SH, $SCH_3$, Cl, F, CN, COOH, COO($C_1$ bis $C_3$-Alkyl), $CF_3$, $N(CH_3)_2$, $N(C_2H_5)_2$, $N(CH_3)C_6H_5$, $^{\oplus}N(CH_3)_3X^{\ominus}$, $^{\oplus}N(CH_3)_2X^{\ominus}$, mit $X^{\ominus}$ einem Säureanion wie z.B. $Cl^{\ominus}$, $Br^{\ominus}$, Acetat, $HSO_4^{\ominus}$,$H_2PO_4^{\ominus}$ und $NO_3^{\ominus}$ und mindestens einer der Reste R2 bis $R^6$ für den Rest

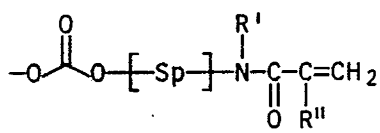

oder

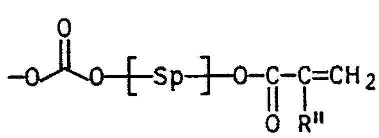

oder

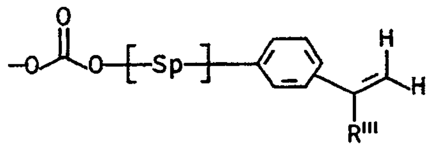

mit Sp für eine der Spacergruppen der folgenden Art

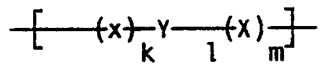

und/oder

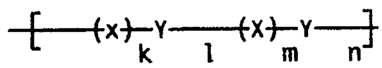

und

R' für H, $C_1$ bis $C_4$-Alkyl, -Phenyl,

R'' für H, $C_1$ bis $C_4$-Alkyl,

R''' für H, $CH_3$ stehen und worin X für einen Zweiwertigen, gegebenenfalls substituierten, gegebenenfalls perfluorierten Alkylenrest, wie z.B. $-CH_2-$, $-CH_2-CH(CH_3)-$, $-CF_2-$ für einen gegebenenfalls substituierten Cycloalkylenrest mit 5 bis 10 Kohlenstoffatomen, für einen gegebenenfalls substituierten o-, m- oder p-Phenylenrest, wobei die X-Reste gleich oder verschieden voneinander sein können, die direkt miteinander verknüpft und/oder durch gleiche oder voneinander verschiedene Gruppen Y miteinander verknüpft sind und Y für einen Zweiwertigen Rest aus der Gruppe

$-O-$ , $-S-$ , 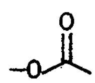 , 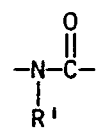 , 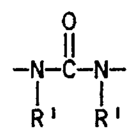 , 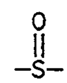 ,

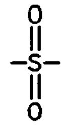 ,

und

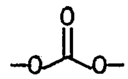

steht und

k, m die Zahlen 1 bis 10 und

l, n die Zahlen 0 bis 25 symbolisieren.

Erfindungsgemäß bevorzugt sind UV-vernetzbare Massen auf Basis von (Meth)-acrylester-Copolymerisaten eines K-Wertes von 15 bis 150 mit einem Gehalt von 0,01 bis 20 Gew.-%, bezogen auf die Copolymerisate an einpolymerisierten Monomeren der allgemeinen Formel IA

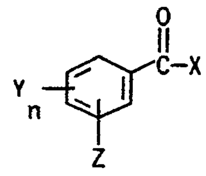

(IA)

aufweisen, in der

X für einen 1 bis 3 C-Atome enthaltende Alkylgruppe oder einen gegebenenfalls durch n-Gruppen Y substituierten Phenylrest,

Y für einen -H, $-CF_3$, -O-Alkyl- und/oder Alkyl-COO- mit jeweils 1 bis 4 C-Atomen in der Alkylgruppe, Halogen, -CN, -COOH oder eine nicht ortho-ständige -OH-Gruppe,

n für 0 bis 4 und

Z für eine Gruppe der allgemeinen Formel

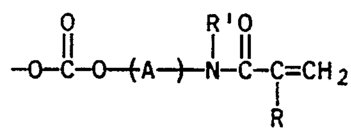

oder

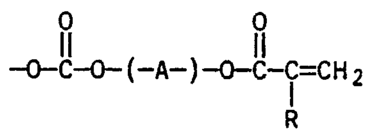

steht, in der

R', R, H, $C_1$- bis $C_4$-Alkyl oder Phenyl und

A einen 2 bis 12 C-Atome aufweisenden, gegebenenfalls substituierten sowie gegebenenfalls durch Estergruppen unterbrochenen Alkylen-, Oxaalkylen-, Arylen- oder Polyoxaalkylenrest bedeuten.

Die Copolymerisate enthalten als Hauptmonomere im allgemeinen überwiegende Anteile meist 50 bis 99,99 Gew.%, vorzugsweise 70 bis 97,5 Gew.% Acryl- und/oder Methacrylsäureester von 1 bis 24, insbesondere 1 bis 12 C-Atomen aufweisenden Alkanolen, wie Methyl-, Ethyl-, Propyl-, i-Amyl-, i-Octyl, n-, iso- und tert.-Butyl-, Cyclohexyl-, 2-Ethylhexyl-, Decyl-, Lauryl-und ferner Stearylacrylat und/oder -methacrylat einpolymerisiert. Als Comonomere kommen z.B. Vinylester 1 bis 20, insbesondere 2 bis 3 C-Atome enthaltender gesättigter Carbonsäure, wie Vinylformiat, Vinylacetat, Vinylpropionat und ferner Vinyllaurat und Vinylstearat, ferner Vinylether mit 3 bis 22 C-Atomen, wie Methyl-, Ethyl-, Butyl-, Hexyl-, Octadecylvinylether, Vinylaromaten mit 8 bis 12 C-Atomen, besonders Styrol oder ferner $\alpha$-Methylstyrol, Vinyltoluole, tert.-Butylstyrol und Halogenstyrole, Olefine mit 2 bis 20 C-Atomen wie besonders Ethylen, Propylen und ferner n- und iso-Butylen, Diisobuten, Triisobuten und Oligopropylene und/oder Vinylhalogenide wie besonders Vinylchlorid und Vinylidenchlorid sowie Allylether oder Allylester in Betracht. Von besonderem Interesse sind auch solche Copolymerisate, die als Comonomere zusätzlich zu anderen Acryl- und Methacrylestern 0,5 bis 20 Gew.%, bezogen auf die Copolymerisate, vorzugsweise 2 bis 10 Gew.% Tetrahydrofurfuryl-2-acrylat oder -methacrylat und/ oder 5-(2-Tetrahydrofurfurylmethoxycarbonyl)pentyl-(meth)acrylat, Alkoxygruppen enthaltende Monomere wie 3-Methoxybutyl(meth)acrylat, 2-Methoxyethyl-(meth)acrylat, 2-Butoxyethyl(meth)acrylat, 2-Ethoxyethyl(meth)acrylat, N-Butoxymethyl(meth)acrylamid und/oder N-Isobutoxymethyl(meth)acrylamid, einpolymerisiert enthalten, wobei Tetrahydrofurfuryl-2-acrylat und -methacrylat und 3-Methoxybutylacrylat und -methacrylat vorgezogen werden.

Mit besonderem Vorteil enthalten die Copolymerisate zusätzlich 0,1 bis 10, vorzugsweise 0,5 bis 4 Gew.% 3 bis 5 C-Atome enthaltende $\alpha,\beta$-monoolefinisch ungesättigte Mono- und/oder Dicarbonsäuren und/oder deren Amide oder gegebenenfalls Monoalkylester oder Anhydride der Dicarbonsäuren einpolymerisiert. Beispiele hierfür sind vor allem Acryl- und Methacrylsäure und Itaconsäure sowie ferner Crotonsäure, Fumarsäure, Maleinsäure, Maleinsäureanhydrid, n-Butyl-maleinsäuremonoester, Fumarsäuremonoethylester, Itakonsäuremonomethylester und Maleinsäuremonomethylester. Von den Amiden derartiger Carbonsäuren sind besonders Acrylamid und Methacrylamid von Interesse. Geeignet sind ferner N-Methylacrylamid und -methacrylamid, N-Methylolacrylamid und -methacrylamid, Maleinsäuremono- und diamid, Itakonsäuremono- und -diamid und Fumarsäuremono- und -diamid. In manchen Fällen kommen auch in Mengen von 0,1 bis 5 Gew.%, bezogen auf die Copolymerisate Vinylsulfonsäure oder ferner Vinylphosphonsäuren in Betracht.

Die Copolymerisate können neben den oben erwähnten Hauptmonomeren zusätzlich weitere Comonomere einpolymerisiert enthalten. Als solche Comonomere kommen in Mengen von bis zu 30 Gew.%, vorzugsweise von 0,5 bis 5 Gew.% auch olefinisch ungesättigte tertiäre Aminoverbindungen in Betracht, wie N,N-Dimethyl(meth)acrylamid, N,N-Diethyl(meth)acrylamid, N,N-Diisopropyl(meth)acrylamid, N,N-Diisobutyl-(meth)acrylamid, N,N-Diethylaminoethyl(meth)acrylat, 4-(N,N-Dimethylamino)styrol, 4-(N,N-Diethylamino)-styrol, Dimethyl- und Diethyl-aminoethylvinylether, N-Vinylimidazol, N-Vinylimidazolin, Vinylpyridine, Dialkyl-(meth)acrylamide, N-Vinylformamid, N-Vinylpyrrolidon, N-Vinylcaprolactam, p-Hydroxy(meth)-acrylsäureanilid, N-tert.-Butyl(meth)acrylamid, Diaceton(meth)acrylamid, N-(1-Methylundecyl)(meth)-acrylamid, N-Isobornyl(meth)acrylamid, N-Adamantyl-(meth)acrylamid, N-Benzyl(meth)acrylamid, N-4-Methylphenyl-, Methyl-(meth)acrylamid, N-Diphenylmethylacrylamid, Phthalimidomethyl(meth)-acrylamid, (Meth)acrylamidohydroxiessigsäure, (Meth)acrylamidoessigsäure, (Meth)acrylamidoessigsäureester wie (Meth)acrylamidoessigsäuremethylester, 2-(Meth)acrylamido-2-methyl-buttersäure, N-(2,2,2-Trichloro-1-hydroxi)ethyl(meth)acrylamid, N,N-bis(2-cyanoethyl)methacrylamid, N-(1,1,1-Trishydroximethyl), Methyl(meth)-acrylamid und N-(3-Hydroxi-2,2-di-methylpropyl)-(meth)acrylamid. Genannt seien ferner 2-Hydroxi-3-[N,N-di-(2-hydroxiethyl)]-propyl(meth)acrylat, 2-Methoxi-3-[N,N-di(2-hydroxiethyl)]-propyl(meth)acrylat, 2-Hydroxi-3-[N-hydroxyethyl-N-alkyl]-propyl(meth)acrylate und/oder 2-Hydroxi-3-[N,N-dialkyl]-propyl(meth)acrylat mit 1 bis 10 C-Atomen im Alkylrest, wie 2-Hydroxi-3-[N-hydroxyethyl-N-methyl]-propyl(meth)acrylat und 2-Hydroxi-3-[N-ethyl-N-methyl]-propyl-methacrylat. Schließlich kommen auch noch in Mengen bis zu 30 Gew.-%, bevorzugt 0,1 bis 25 Gew.-%, besonders bevorzugt 0,5 bis 20 Gew.-% monoolefinisch ungesättigte Monomere von der Art des 3-Cyclohexylpropyl-1-(meth)acrylat, Cyclohexyl-(meth)acrylat, 4-tert.-Butylcyclohexyl(meth)acrylat, 2-N-Morpholinoethyl(meth)acrylat, 2-N-Morpholino-n-hexyl(meth)acrylat und Furfuryl(meth)acrylat, Iso-bornyl(meth)acrylat, Cyclohexyl(meth)acrylat und Isobornyl(meth)acrylat in Frage. Ferner können in Mengen bis zu 10 Gew.-% Silicium enthaltende Comonomere wie z.B. Vinyltrimethoxysilan, (Meth)acryloxypropyltrimethoxysilan und Vinyltriethoxysilan mit verwendet werden.

Die erfindungsgemäßen Copolymerisate haben K-Werte von 10 bis 150, im allgemeinen von 15 bis 100, bestimmt nach DIN 53 726 in 1 %iger Lösung in Tetrahydrofuran bei 25° C. Vorzugsweise beträgt der K-Wert 25 bis 50, wenn die Massen als Schmelzhaftkleber verwendet werden sollen. Sollen die Massen zum Beschichten von Dachziegeln verwendet werden, so betragen ihre K-Werte vorzugsweise 60 bis 100, und Massen, die für Lacke verwendet werden sollen, haben vorzugsweise K-Werte von 15 bis 85.

Die UV-vernetzbaren Massen, die für Haftkleber in Form ihrer Schmelzen appliziert werden, haben meist Staudingerindizes (Viskositätszahlen) zwischen 0,10 100 ml/g und 1,60 100 ml/g (gemessen in Tetrahydrofuran bei 25° C), bevorzugt 0,2 bis 0,9 100 ml/g, ganz besonders bevorzugt 0,25 bis 0,49 100 ml/g.

Die Monomeren der allgemeinen Formel I sind z.B. erhältlich, indem man

z.B. entweder eine Verbindung der allgemeinen Formel (2)

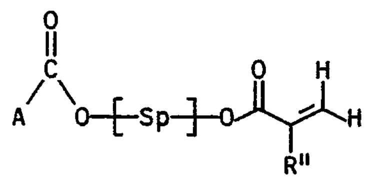

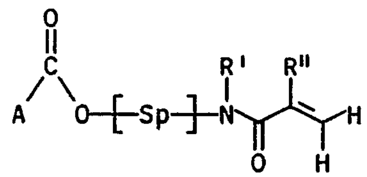

(2)

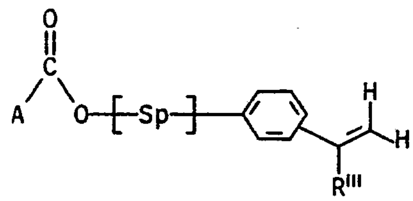

worin Sp, R', R'' und R''' die oben bereits angegebene Bedeutung haben und A für eine Gruppe der Reihe Tosylat, Alkoxy, Halogen, Phosphonium, Sulphonium steht, Ammonium, Pyridiniumkation oder eine des Typs der Haloglyoxylate
mit einer Verbindung der allgemeinen Formel (3)

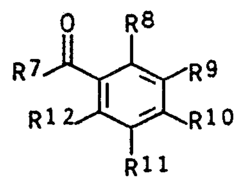

(3)

worin $R^7$ für einen geradkettigen Alkylrest mit 1 bis 3 Kohlenstoffatomen, einen verzweigten, gegebenenfalls substituierten Alkylrest mit 3 bis 4 Kohlenstoffatomen oder für einen Arylrest steht und worin die $R^8$ bis $R^{12}$ untereinander gleich oder verschieden sind und für H, Alkyl mit 1 bis 4 Kohlenstoffatomen, OH, $OCH_3$, $OC_2H_5$, SH, $SCH_3$, Cl, F, CN, COOH, COO($C_1$- bis $C_3$-Alkyl), $CF_3$, $N(CH_3)_2$, $N(C_2H_5)_2$, $N(CH_3)C_6H_5$, $N^{\oplus}$-$(CH_3)_3X^{\ominus}$, mit $X^{\ominus}$ einem Säureanion, wie $Cl^{\ominus}$, $Br^{\ominus}$ Acetat, $HSO_4^{\ominus}$, $H_2PO_4^{\ominus}$ und $NO_3^{\ominus}$ stehen, mit der Maßgabe, daß mindestens einer der Reste $R^8$ bis $R^{12}$ für eine Hydroxylgruppe steht,
im äquimolaren Verhältnis oder dem zwei- bis dreifachen davon, gegebenenfalls in Gegenwart eines inerten Lösungsmittels oder Lösungsmittelgemisches und eines basischen Katalysators bei Temperaturen von 0 bis 100 °C unter wasserfreien Bedingungen umsetzt.

Monomere der allgemeinen Formel (I) sind des weiteren z.B. erhältlich, indem man
eine Verbindung der allgemeinen Formeln (4) bis (6)

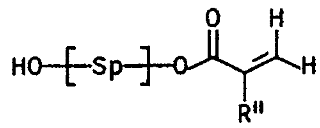
(4)

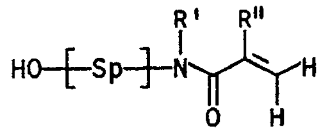
(5)

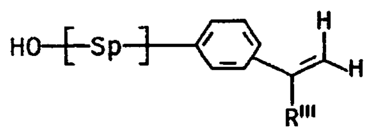
(6)

worin Sp, R', R'', R''' die oben bereits angegebene Bedeutung haben, mit einer Verbindung der allgemeinen Formel

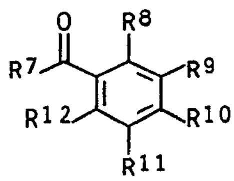
(7) ,

worin $R^7$ für einen geradkettigen Alkylrest mit 1 bis 3 Kohlenstoffatomen, einen verzweigten, gegebenenfalls substituierten Alkylrest mit 3 bis zu 4 Kohlenstoffatomen oder für einen Arylrest steht und worin die $R^8$ bis $R^{12}$ untereinander gleich oder verschieden sind und für H, Alkyl mit 1 bis 4 Kohlenstoffatomen, OH, $OCH_3$, $OC_2H_5$, SH, $SCH_3$, Cl, F, CN, COOH, COO($C_1$- bis $C_3$-Alkyl), $CF_3$, $N(CH_3)_2$, $N(C_2H_5)_2$, $N(CH_3)C_6H_5$, $N^{\oplus}$-$(CH_3)X^{\ominus}$, mit $X^{\ominus}$ einem Säureanion, wie $Cl^{\ominus}$, $Br^{\ominus}$, Acetat, $HSO_4^{\ominus}$, $H_2PO_4^{\ominus}$ und $NO_3^{\ominus}$ stehen, mit der Maßgabe, daß mindestens einer der Reste $R^8$ bis $R^{12}$ für eine Gruppe des Typs A-CO-O, worin A die vorstehend bereits beschriebene Bedeutung hat, steht,
im äquimolaren Verhältnis oder dem zwei- oder dreifachen davon, gegebenenfalls in Gegenwart eines inerten Lösungsmittels oder Lösungsmittelgemisches und eines basischen Katalysators bei Temperaturen von 0 bis 100 °C unter wasserfreien Bedingungen umsetzt.

Zur stofflichen Seite ist hierzu im einzelnen zu sagen:
Verbindungen der Formel (2) können z.B. ω-Chlorformylalkyl-(meth)-acrylate und/oder ω-Chlorformyl-(meth)-acrylamide sein.

Eine Verbindung der Formel (7) ist z.B. 4-Chlorformylbenzophenon.

Verbindungen der Formel (4) bis (6) können z.B. sein

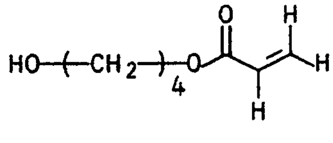
,

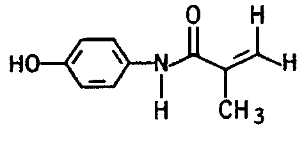
,

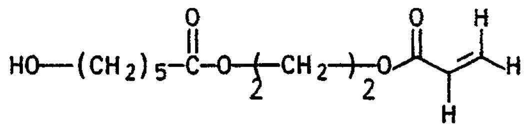 ,

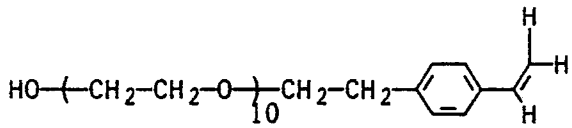

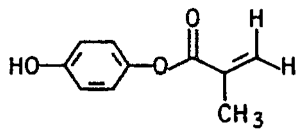 ,

Die in eckige Klammern gezeichneten Spacer Sp können z.B. sein

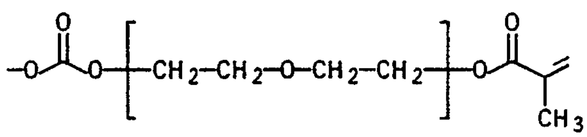 ,

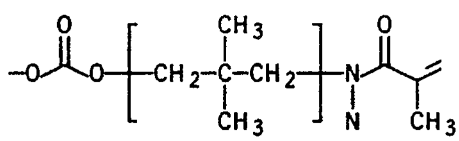 ,

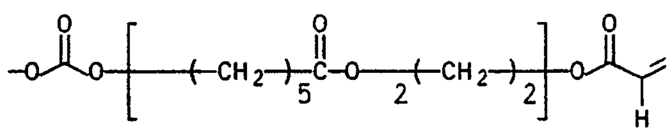 ,

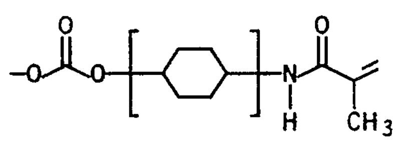 ,

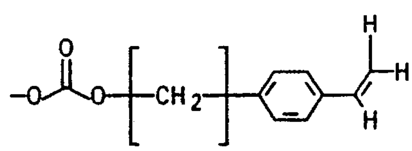 ,

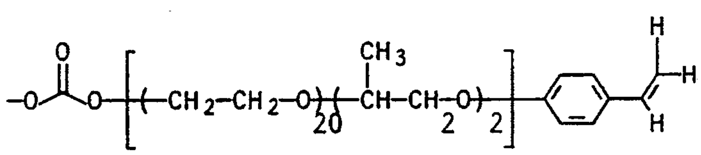 ,

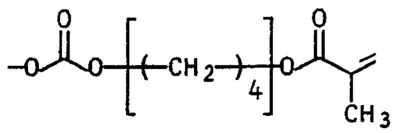

oder

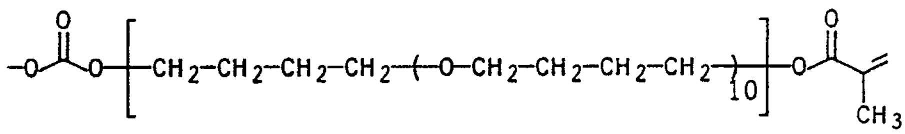 .

Als Monomere der allgemeinen Formel (I) sind von besonderem Interesse für den erfindungsgemäßen Zweck die Acryl- und/oder Methacrylsäureester der Verbindung II

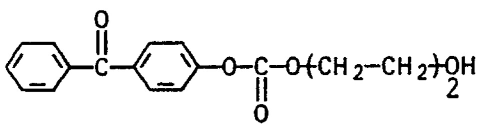 II

Sehr gut geeignet als Monomere der allgemeinen Formel I - als Benzophenon-Derivate - sind auch die Acryl- und Methacrylsäureester der Verbindungen III und IV

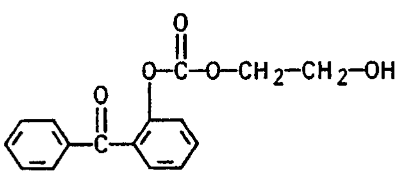 III

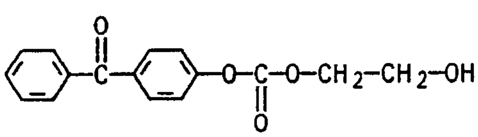 IV

In Betracht zu ziehende Acetophenon-Derivate sind z.B. die Acryl- und Methacrylsäureester der Verbindungen V und VI

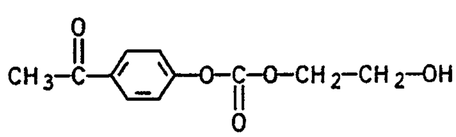 V

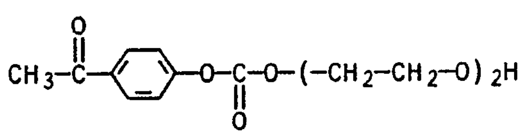 VI

Bei diesen Verbindungen handelt es sich um Acryl- und Methacrylsäureester von Acetophenon- und Benzophenon-Derivaten die an einer Phenylgruppe des Acetophenons bzw. des Benzophenons in ortho- oder para-Stellung eine Carbonatgruppe aufweisen.

Des weiteren gut geeignet als einzupolymerisierende Benzophenon-Derivate sind z.B. auch die folgenden Acryl- und Methacrylsäurederivate IX bis XVI.

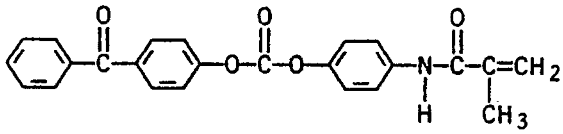

IX

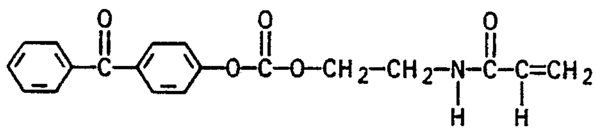

X

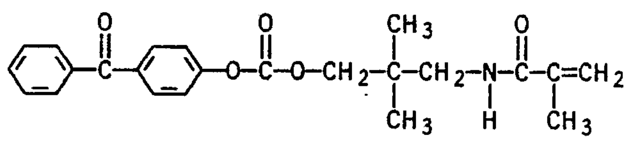

XI

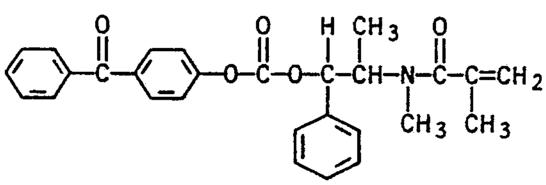

XII

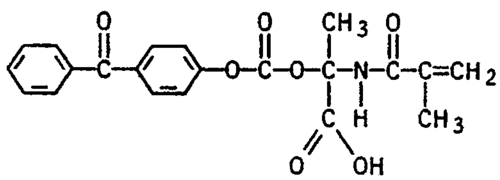

XIII

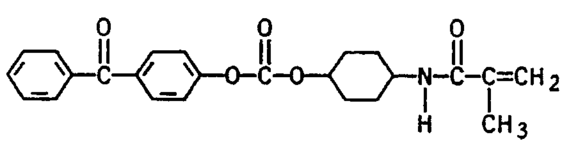

XIV

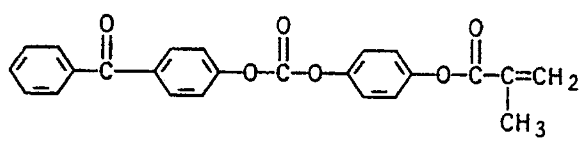

XV

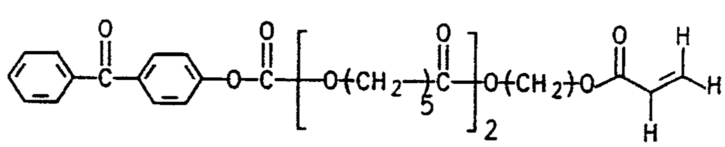

XVI

Die Benzophenonderivate können für sich allein oder aber im Gemisch verwendet werden.

Schließlich können die Copolymerisate noch weitere Monomere mit funktionellen Gruppen in Mengen bis zu 20 % ihres Gewichts einpolymerisiert enthalten, z.B. Hydroxalkyl(meth)acrylate, wie 2-Hydroxypropyl-

(meth)acrylat, 2-Hydroxyethyl(meth)acrylat, 4-Hydroxybutyl(meth)acrylat sowie Glycidylacrylat und -methacrylat. Auch Monoacrylsäure- und Monomethacrylsäureester von Polyetherolen oder von propoxylierten Fettalkoholen, beispielsweise eines Molekulargewichts von 200 bis 10.000 oder von polyethoxylierten Alkanolen und/oder Phenolen können in Mengen von 0,5 bis 10 Gew.% in manchen Fällen als Comonomere von Vorteil sein.

Des weiteren können auch in Mengen bis zu 25 Gew.% makromolekulare (Meth)acrylsäureester verwendet werden, z.B. solche, die einen Polystyrolrest enthalten, z.B. MACROMER® 13-K PSMA (Fa. Sartomer International Inc.).

Soweit die Copolymerisate als Haftkleber eingesetzt werden sollen, verwendet man bevorzugt solche Acrylsäure- und/oder Methacrylsäureester als Hauptmonomere, deren Homopolymerisate Glastemperaturen unter 0 °C, insbesondere unter -10 °C haben, insbesondere n- und iso-Butylacrylat und -methacrylat, i-Amyl-, i-Octylacrylat und -methacrylat und 2-Ethylhexylacrylat und -methacrylat sowie ferner Decylacrylat und Laurylacrylat und -methacrylat. Der Anteil dieser Hauptmonomeren beträgt dann vorzugsweise über 60 % der gesamten Monomeren.

Die Copolymerisate enthalten im allgemeinen 0,1 bis 15 % ihres Gewichtes an einpolymerisierten Monomeren der allgemeinen Formel I, doch reichen häufig schon Mengen von 0,01 bis 5 % des Gewichts der Copolymerisate aus.

Die neuen UV-vernetzbaren (Meth)acrylsäureester-Copolymerisate können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert. Vorzugsweise werden die neuen Copolymerisate durch Polymerisation der Monomeren in Lösungsmitteln, insbesondere in Lösungsmitteln eines Siedebereichs von 50 bis 150 °C, vorzugsweise von 60 bis 120 °C unter Verwendung der üblichen Menge an Polymerisationsinitiatoren, die im allgemeinen bei 0,01 bis 10, insbesondere bei 0,1 bis 4 Gew.%, bezogen auf das Gesamtgewicht der Monomeren liegt, hergestellt. Als Lösungsmittel kommen insbesondere Alkohole, wie Methanol, Ethanol, n- und iso-Propanol, n- und iso-Butanol, vorzugsweise Isopropanol und/oder Isobutanol sowie Kohlenwasserstoffe wie Toluol und insbesondere Benzine eines Siedebereichs von 60 bis 120 °C in Frage. Ferner können Ketone, wie Aceton, Methylethylketon und Ester, wie Essigsäureethylester sowie Gemische von Lösungsmitteln der genannten Art eingesetzt werden, wobei Gemische, die Isopropanol und/oder Isobutanol in Mengen von 5 bis 95, insbesondere von 10 bis 80, vorzugsweise von 25 bis 60 Gew.%, bezogen auf das eingesetzte Lösungsgemisch, enthalten, vorgezogen werden.

Als Polymerisationsinitiatoren kommen bei der Lösungspolymerisation beispielsweise 2,2'-Azobisisobutyronitril, Acylperoxide, wie Benzoylperoxid, Dilauroylperoxid, Didecanoylperoxid und Isononanoylperoxid, Alkylperester wie tert.-Butylperpivalat, tert.-Butyl-per-2-ethylhexanoat, tert.-Butyl-per-maleinat, tert.-Butyl-per-isononanoat und tert.-Butylperbenzoat, Dialkylperoxide wie Dicumylperoxid, tert.-Butylperoxid, Di-tert.-Butylperoxid und Peroxidicarbonate, wie Dimyristyl-Peroxidicarbonat, Bicetylperoxidicarbonat, Bis(4-tert.-Butyl-cyclohexyl)peroxidicarbonat, Dicyclohexylperoxidicarbonatund Di-2-ethylhexyl-peroxidicarbonat, Hydroperoxide wie Cumolhydroperoxid und tert.-Butylhydroperoxid und Polymerisationsinitiatoren wie 3,4-Dimethyl-3,4-diphenylhexan und 2,3-Dimethyl-2,3-diphenylbutan, in Frage. Als Polymerisationsinitiatoren besonders bevorzugt sind Ketonperoxide, wie Methylethylketonperoxid, Acetylacetonperoxid, Cyclohexanonperoxid und Methylisobutylketonperoxid. Bei der Emulsionspolymerisation können die üblichen Initiatoren wie z.B. Na-, K- und Ammoniumperoxodisulfat verwendet werden.

Die Polymerisation kann in an sich üblicher Weise durchgeführt werden in einer Polymerisationsapparatur, die im allgemeinen mit einem Rührer, mehreren Zulaufgefäßen, Rückflußkühler und Heizung/Kühlung versehen ist und für das Arbeiten unter Inertgasatmosphäre und Überdruck bzw. vermindertem Druck ausgerüstet ist.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150 °C arbeitet. Die neuen Copolymerisate können dann in lösungsmittelfreiem Zustand, d.h. als Schmelzen, insbesondere als Schmelzhaftkleber, aber auch zum Beschichten mineralischer Substanzen wie besonders Dachziegeln und als Lacke eingesetzt werden. In manchen Fällen ist es auch von Vorteil, die neuen, UV-vernetzbaren Copolymerisate durch Polymerisation in Substanz, d.h. ohne Mitverwendung eines Lösungsmittels, herzustellen, wobei man chargenweise oder auch kontinuierlich, z.B. nach den Angaben der US-PS 4 042 768, arbeiten kann.

Soweit man die neuen Copolymerisate in Form von Lösungen beispielsweise für Lacke oder zum Beschichten von Dachziegeln einsetzt, enthalten die Gemische aus den Copolymerisaten und Lösungsmitteln im allgemeinen 10 bis 900, vorzugsweise 20 bis 200, insbesondere 25 bis 150 % ihres Gewichts an

Lösungsmitteln.

In manchen Fällen, beispielsweise wenn die neuen Copolymerisate in wäßriger Emulsion durch Emulsionspolymerisation hergestellt werden, können auch übliche Regler in den üblichen Mengen, beispielsweise in Mengen von 0,1 bis 15, vorzugsweise von 2 bis 10 Gew.%, bezogen auf die Monomeren mitverwendet werden. Derartige Regler sind beispielsweise Mercaptoverbindungen, wie 2-Mercaptoethanol, 3-Mercaptopropionsäuremethylester, 3-Mercaptopropyltrimethoxysilan, 3-Mercaptopropyl-methyl-dimethyloxysilan, 3-Mercaptopropionsäure, 1,6-Dimercaptohexan, 1,9-Dimercaptononan, Kohlenwasserstoffe wie Cumol, Alkohole, wie Isopropanol, Isobutanol oder halogenierte Kohlenwasserstoffe wie Tetrachlorkohlenstoff, Tetrabrommethan, Chloroform oder Bromoform. Als Regler werden Verbindungen wie 3-Mercaptopropionsäure, 3-Mercapto-1,2-propandiol, 2-Mercaptoethanol, Glycerin und Di- und Triglyceride vorgezogen. Des weiteren können auch Ether, wie Dioxan und Tetrahydrofuran, als Regler verwendet werden.

Beim Einsatz der neuen Massen können diese in an sich üblicher Weise modifiziert und/oder konfektioniert werden. Beispielsweise können übliche klebrigmachende Harze, z.B. Kohlenwasserstoffharze, gegebenenfalls modifizierte Kollophoniumharze, Terpenphenolharze, Ketonharze, Aldehydharze oder Homopolymerisate wie Poly-2-ethylhexylacrylat und Poly-$\alpha$-methylstyrol, ferner Weichmacher, z.B. auf Basis von Mono-, Di- oder Polyesterverbindungen, polychlorierten Kohlenwasserstoffen oder Paraffinölen, Farbstoffe und Pigmente, oder Stabilisatoren oder kautschukelastische Stoffe, wie Natur- oder Synthesekautschuk, Polyvinylether sowie ferner Polybutadienöle, zugesetzt werden. Zur Modifizierung kommen auch ein- oder mehrfach olefinisch ungesättigte höhermolekulare Verbindungen in Betracht, wie mit Acrylsäure veresterte Polyesterole und Polyetherole wie Tripropylenglykolacrylat, Tetraethylenglykol-acrylat und Polyethylenglykoldiacrylat. Geeignet sind außerdem Diacrylate und Dimethacrylate von Poly-tetrahydrofuran mit Molekulargewichten von meist 250 bis 2000 (Zahlenmittel). Derartige mindestens diolefinisch ungesättigte Verbindungen können mit Vorteil in Mengen von 0,1 bis 10 Gew.%, bezogen auf das neue Copolymerisat eingesetzt werden, wobei diolefinisch ungesättigte Verbindungen dieser Art mit einem Molekulargewicht (Zahlenmittel) von mindestens 500 von besonderem Interesse sind.

Die neuen UV-vernetzbaren Massen eignen sich insbesondere als Schmelzen oder ferner auch als Lösungen oder in Form von wäßrigen Dispersionen zur Herstellung von Überzügen, Beschichtungen und Imprägnierungen, insbesondere von Haftklebern, Haftklebefolien und Haftklebeetiketten sowie Prägezangenfolien. Dabei können die Massen in an sich üblicher Weise durch Streichen, Spritzen, Walzen, Rakeln oder Gießen, gegebenenfalls bei erhöhter Temperatur - meist im Temperaturbereich von 20 bis 150 °C - auf übliche Substrate aufgebracht werden, beispielsweise auf Papier, Pappe, Holz, Metalle und Kunststoff-Folien, z.B. aus weichgemachtem PVC, Polyethylen, Polyamiden, Polyethylenglykolterephthalat oder Aluminium sowie Polypropylen.

Soweit dabei Lösungsmittel mitverwendet werden, können diese von den überzügen leicht, gegebenenfalls bei Raumtemperatur oder wenig erhöhten Temperaturen, im allgemeinen bei Temperaturen von 20 bis 150, vorzugsweise von 50 bis 80 °C abgedampft werden, wobei in an sich üblicher Weise Heizstrahler oder Warmluftwälzvorrichtungen eingesetzt werden. Die gegebenenfalls getrockneten oder vorgetrockneten Aufträge können anschließend durch Bestrahlen mit UV-Licht vernetzt werden, wobei man gut klebende Überzüge erhält, die eine hohe Kohäsion und eine gute Schälfestigkeit bei vorzüglicher Alterungsbeständigkeit aufweisen. Dabei braucht nicht unter Inertgasatmosphäre bestrahlt zu werden, man kann vielmehr an der Luft arbeiten. Als UV-Strahler können die üblichen Strahler z.B. Quecksilberdampf-nieder-, -mittel- und -hochdrucklampen eingesetzt werden, die Leistungen von z.B. 80 bis 160 Watt/cm haben können. Dabei ermöglichen Lampen mit höherer Leistung im allgemeinen eine schnellere Vernetzung. In manchen Fällen kann bei der vernetzenden Bestrahlung gleichzeitig durch den IR-Anteil der Lampen restliches Lösungsmittel oder Wasser entfernt werden.

Die Klebeeigenschaften von flächigen Substraten, die eine Haftklebeschicht aufweisen, kann durch Messen der Scherfestigkeit als Maß für die Kohäsion und der Schälfestigkeit als zusammenfassendes Maß für Kohäsion und Oberflächenklebrigkeit erfaßt werden.

Für die Prüfung werden Folien aus Polyethylenglykolterephthalat mit den erfindungsgemäßen Mitteln derart beschichtet, daß sich eine Trockenschichtdicke von 25 $\mu$m ergibt.

Für die Prüfung der lösemittelfreien Schmelzhaftkleber werden auf einem beheizbaren Streichtisch Polyethylenglykoltherephthalatfolien mit den Mitteln bei 85 °C bis 120 °C so beschichtet, daß sich eine Schichtdicke von etwa 25 $\mu$m ergibt.

Sofern für die Prüfung gelöste Copolymerisate eingesetzt werden, werden die Lösemittel 1 Minute bei 70 °C und 1 bar abgedampft. Die beschichteten und getrockneten Folien werden mit dem Licht von Quecksilbermitteldrucklampen bestrahlt.

Die Bestrahlung erfolgt mit zwei hintereinander angeordneten Quecksilbermitteldrucklampen mit einer Leistung von jeweils 80 Watt/cm. Die beschichteten und getrockneten Folien werden auf ein laufendes

Endlosband gelegt, so daß die beschichteten Folien in einem Abstand von 10 cm mit einer Geschwindigkeit von 20 m/min unter den Lampen hindurchlaufen.

Die Bestrahlung erfolgt an der Luft.

Die so hergestellten Folien werden in 2 cm breite Streifen geschnitten und diese Streifen auf eine verchromte Messingplatte aufgebracht. Die Platte wird mit den Streifen 24 Stunden bei 23°C und 65 % relativer Luftfeuchtigkeit gelagert.

Zur Messung der Schälfestigkeit werden die Prüfstreifen parallel zur Klebeschicht mit einer Geschwindigkeit von 300 mm/min rückwärts abgezogen. Die hierfür erforderliche Kraft wird gemessen.

Bei der Messung der Scherfestigkeit wird eine verklebte Fläche von 20 x 25 mm zurechtgeschnitten, die Platte senkrecht eingespannt und der überhängende Teil des Klebestreifens mit einem Gewicht von 1 kg belastet. Es wird die Zeit bestimmt, bis sich die Verklebung löst. Die Messung wird bei 23°C und 50°C durchgeführt. Alle Messungen werden 3fach gemacht.

Zur Messung des Schlingenwertes wird ein 2 cm breiter Klebestreifen von 150 mm Länge zu einer Schlinge geformt und die beiden Enden des Klebestreifens in die Klemmbacken einer Zugprüfmaschine gespannt. Die Klebestreifenschlinge wird in Kontakt mit einer Normalplatte aus nichtrostendem Stahl gebracht und das Klebeband mit einer Geschwindigkeit von 300 mm/min abgezogen. Die für das Abziehen des Streifens von der Stahlplatte erforderliche Kraft wird gemessen. Aus 6 Messungen wird der Mittelwert gebildet.

Die in den folgenden Beispielen angegebenen Teile und Prozente beziehen sich auf das Gewicht. Die Bestimmung der K-Werte erfolgt nach DIN 53 726 in 1 %iger Lösung in Tetrahydrofuran bei 25°C. Die Schmelzviskositäten werden mit einem Kegel-Platte-Rheometer z.B. Rotovisko RV 20 mit Meßeinrichtung PK 100 (Fa. Haake, Karlsruhe) gemessen (D = Schergeschwindigkeit in 1/s).

Der Staudingerindex (Viskositätszahl) wird in Tetrahydrofuran bei 25°C nach bekannten Methoden bestimmt (z.B. G.V. Schulz, H.-J. Cantow in Houben-Weyl, Methoden der organischen Chemie, G. Thieme Verlag, 1955, Bd. 3/1, Seiten 431 bis 445 und B. Vollmert: Grundriss der makromolekularen Chemie, Band III, Seite 55ff.

Beispiel 1

Copolymerisatlösung P1

Zu einem Gemisch aus 160 g Ethylacetat, 50 g Tetrahydrofuran, 9 g tert-Butyl-per-2-ethylhexanoat gibt man 150 g einer Monomermischung aus 500 g iso-Amylacrylat, 300 g 2-Ethylhexylacrylat, 170 g Methylacrylat, 30 g Acrylsäure und 7,5 g eines Benzophenonderivates der Formel VII.

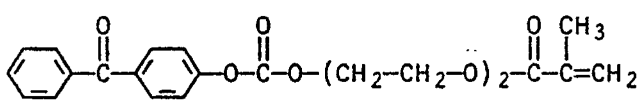

(VII)

Das Gemisch wird bei 85°C 15 Minuten polymerisiert. Zu der Reaktionsmischung gibt man innerhalb von 2 Stunden den Rest des Monomergemisches und gleichzeitig im Verlauf von 3 Stunden eine Lösung von 5 g tert-Butyl-per-2-ethylhexanoat in 40 g Ethylacetat. Nach beendeter Monomerzugabe polymerisiert man noch 5 Stunden nach.

Man erhält ein Copolymerisat vom K-Wert 38,5 und einem Staudingerindex (Viskositätszahl von 0,39 (100 ml/g).

Das von Lösemittel und flüchtigen Anteilen befreite Copolymerisat P1 hat bei 120°C eine Schmelzviskosität von 15 Pa.s (D = 100 l/s).

Mischung M 1

500 g des Copolymerisats P 1 werden mit 62,5 g eines Poly-α-methylstyrolharzes (Nevbrite 85, Fa. Neville Cindu Chemie B.V.) in der Schmelze gemischt.

Beispiel 2

Copolmyerisatlösung P 2

Zu einem Gemisch aus 160 g Ethylacetat, 50 g Tetrahydrofuran, 10 g tert-Butyl-per-2-ethylhexanoat gibt man 150 g einer Monomermischung aus 500 g n-Butylacrylat, 330 g 2-Ethylhexylacrylat, 150 g Methylmethacrylat, 20 g Acrylsäure und 7,5 g eines Benzophenonderivates der allgemeinen Formel IV.

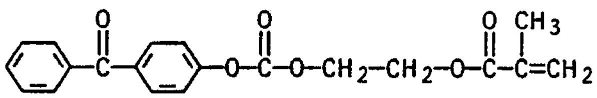

IV

Das Gemisch wird bei 80 °C 15 Minuten polymerisiert. Zu der Reaktionsmischung gibt man innerhalb von 2 Stunden den Rest des Monomergemisches und gleichzeitig im Verlauf von 3 Stunden eine Lösung von 5 g tert-Butyl-per-2-ethylhexanoat in 40 g Ethylacetat. Nach beendeter Monomerzugabe polymerisiert man noch 5 Stunden nach.

Man erhält ein Copolymerisat vom K-Wert 42 und einem Staudingerindex (Viskositätszahl) von 0,40 (100 ml/g).

Das von Lösemittel und flüchtigen Anteilen befreite Copolymerisat P 2 hat bei 120 °C eine Schmelzviskosität von 20 Pa.s (D = 200 l/s).

Mischung M 2

500 g des Copolymerisats P 2 werden mit 50 g eines Kolophoniumharzes (Foral 85, Fa. Hercules) in der Schmelze gemischt.

Beispiel 3

Copolymerisatlösung P 3

Zu einer Mischung aus 280 g eines n-hexanarmen Benzins vom Siedebereich 60 bis 95 °C und 70 mg 2,2'-Azobisisobutyronitril (Porofor N) gibt man 270 g einer Monomermischung aus 870 g 2-Ethylhexylacrylat, 100 g Methylacrylat, 30 g Acrylsäure und 2,0 g des Benzophenonderivates der allgemeinen Formel VIII.

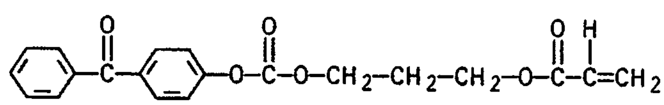

VIII

Die Reaktionsmischung wird 15 Minuten bei Rückflußtemperatur anpolymerisiert. Anschließend gibt man im Verlauf von 2 Stunden den Rest der Monomermischung hinzu und hält nach beendeter Zugabe noch zwei Stunden unter leichtem Rückfluß. Anschließend werden zu der Reaktionsmischung 10 Gew.% einer Lösung von 10 g tert-Butylperpivalat in 50 g n-hexanarmen Benzin eines Siedebereiches von 60 bis 95 °C innerhalb 5 Minuten hinzugegeben. Nach einer weiteren Stunde wird der Rest dieser Lösung und gleichzeitig 670 g n-hexanarmes Benzin des Siedebereiches 60 bis 95 °C hinzugegeben.

Man erhält die Lösung eines Copolymerisats P 3 mit einem K-Wert von 68.

Beispiel 4

Copolymerisat P 4

Man verfährt wie für Copolymerisat P 2 angegeben, polymerisiert jedoch eine Mischung aus 800 g i-Amylacrylat, 180,0 g Vinylacetat, 20 g Methacrylsäure und 7,0 g des Benzophenonderivates IX. Man erhält ein Copolymerisat mit dem K-Wert 36,1.

Beispiel 5

Copolymerisat P 5

Man verfährt wie für Copolymerisat P 2 angegeben, polymerisiert jedoch eine Mischung aus 900 g i-Amylacrylat, 100 g Macromer® 13 K-RC Monomer (Styrololigomer mit einer Methacrylesterendgruppe der

Fa. Sartomer Inc.) und 6,5 g des Benzophenonderivates II. Man erhält ein Copolymerisat mit K-Wert 34,5.

Tabelle 1: Ergebnisse der anwendungstechnischen Prüfung als Haftkleber

| Probe | Scherfestigkeit [Stunden] bei 23°C | 50°C | Schälfestigkeit [N/2 cm] sofort | nach 24 Stunden | Schlingen-wert [N/2cm] | Finger- *) klebrigkeit |
|---|---|---|---|---|---|---|
| P 1 | > 100 | > 24 | 9,1 | 12,6 | - | sehr gut |
| M 1 | > 24 | > 10 | 9,7 | 14,5 | - | gut |
| P 2 | > 100 | > 24 | 6,5 | 9,2 | - | gut |
| M 2 | > 24 | > 10 | 7,0 | 11,2 | - | gut |
| P 3 | > 100 | > 24 | 6,0 | 7,5 | - | gut |
| P 4 | > 24 | > 24 | 11,7 | 19,0 | 11,3 | gut |
| P 5 | > 100 | > 10 | 5,5 | 8,5 | - | gut |

*) Die Fingerklebrigkeit wurde durch eine Gruppe beurteilt

Beispiel 6

Copolymerisat P 6

Durch Polymerisation einer Monomermischung von 350 g Styrol, 300 g n-Butylacrylat, 330 g Methylmethacrylat, 20 g Acrylsäure und 50 g des Benzophenonderivates II stellt man ein Copolymerisat mit dem K-Wert 40 her. Für die Anwendung als UV-vernetzbarer Schmelzlack wird das Copolymerisat getrocknet und zu einem Pulver vermahlen.

Mit dem Pulver werden Stahlbleche beschichtet und die Pulverbeschichtrungen 30 Minuten bei 130° C verfilmt und anschließend sofort, ohne eine längere Abkühlphase, 2 Minuten mit dem UV-Licht eines UV-Flachbelichters (Uvaspot 400 K der Fa. Dr. Hönle) bestrahlt. Man erhält einen klaren glänzenden Film.

| Prüfblech | Versuch 1 | Versuch 2 |
|---|---|---|
| Schichtdicke | 55 µm | 53 µm |
| UV-Bestrahlung | nein | ja |
| Tiefung (DIN 53 156) | 2,8 | 8,5 |
| Pendeldämpfung (DIN 53 157) | 105" | 160" |
| Ethanolfestigkeit *) | - | + |

*) Die Ethanolfestigkeit wurde durch Wischen mit einem ethanolfeuchten Wattebausch geprüft: -: Anquellen und Ablösen des Films
+: Kein Ablösen des Films

Beispiel 7

Copolymerisat P 7

Durch Polymerisation einer Monomermischung von 345 g Styrol, 305 g i-Amylacrylat, 330 g Methylmethacrylat, 20 g Acrylsäure und 45 g des Benzophenonderivates II stellt man ein Copolymerisat mit dem K-Wert 38 her. Für die Anwendung als UV-vernetzbaren Schmelzlack wird das Copolymerisat getrocknet.

Das Copolymerisat wurde als Schmelze bei 150 ° C mit einem Rakel auf Stahlbleche in einer Schichtdicke von ca. 50 µm aufgetragen und anschließend mit UV-Licht bei 100 ° C 1 Minute bestrahlt.

Parallel wurde ein Blech beschichtet, jedoch nicht bestrahlt.

| Prüfblech | Versuch 3 | Versuch 4 |
|---|---|---|
| Schichtdicke | 49 µm | 48 µm |
| UV-Bestrahlung | nein | ja |
| Tiefung (DIN 53 156) | 3,1 | 9,5 |
| Pendeldämpfung (DIN 53 157) | 100" | 172" |
| Ethanolfestigkeit | - | + |

Beispiel 8

Copolymerisat P 8

Durch Polymerisation einer Mischung aus 500 g n-Butylacrylat, 325 g i-Butylacrylat, 150 g Methylacrylat und 10 g des Benzophenonderivates X und unter Verwendung von 25 g 3-Mercaptopropyltriethoxysilan als Polymerisationsregler wird ein Copolymerisat vom K-Wert 32 hergestellt. Das vom Lösemittel und flüchtigen Anteilen befreite Copolymerisat fließt bei Raumtemperatur und eignet sich als UV-vernetzbare Dichtmasse.

**Patentansprüche**

1. UV-vernetzbare Massen auf Basis von (Meth)acrylester-Copolymerisaten eines K-Werts von 10 bis 150, mit einem Gehalt von 0,01 bis 20 Gew.%, bezogen auf die Copolymerisate an einpolymerisierten Monomeren der allgemeinen Formel I

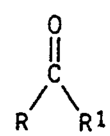

(I) ,

worin

R für einen geradkettigen Alkylrest mit 1 bis 3 Kohlenstoffatomen, einen verzweigten, gegebenenfalls substituierten Alkylrest mit 3 oder 4 Kohlenstoffatomen, für einen Arylrest oder den Rest $R^1$ steht und

$R^1$ für den Rest

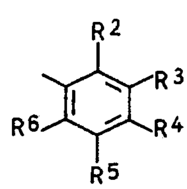

steht, wobei die Reste $R^2$ bis $R^6$ untereinander gleich oder verschieden sind und stehen für H, Alkyl mit 1 bis 4 Kohlenstoffatomen, eine nicht orthoständige OH-Gruppe, $OCH_3$, $OC_2H_5$, SH, $SCH_3$, Cl, F, CN, COOH, COO($C_1$ bis $C_3$-Alkyl), $CF_3$, $N(CH_3)_2$, $N(C_2H_5)_2$, $N(CH_3)C_6H_5$, $^{\oplus}N(CH_3)_3X^{\ominus}$, $^{\oplus}N(CH_3)_2X^{\ominus}$, mit $X^{\ominus}$ einem Säureanion wie z.B. $Cl^{\ominus}$, $Br^{\ominus}$, Acetat, $HSO_4^{\ominus}$, $H_2PO_4^{\ominus}$ und $NO_3^{\ominus}$ und mindestens einer der Reste $R^2$ bis $R^6$ für den Rest

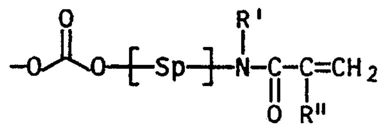

oder

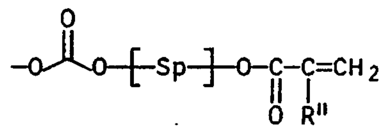

oder

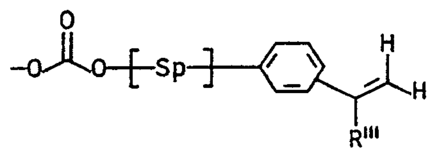
,

mit Sp für eine der Spacergruppen der folgenden Art

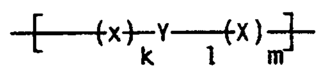

und/oder

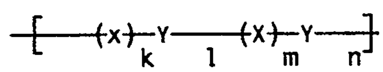

und

R' für H, $C_1$ bis $C_4$-Alkyl, Phenyl,
R'' für H, $C_1$ bis $C_4$-Alkyl,
R''' für H, $CH_3$

stehen und worin X für einen zweiwertigen, gegebenenfalls substituierten, gegebenenfalls perfluorierten Alkylenrest, für einen gegebenenfalls substituierten Cycloalkylenrest mit 5 bis 10 Kohlenstoffatomen, für einen gegebenenfalls substituierten o-, m- oder p-Phenylenrest, wobei die X-Reste gleich oder verschieden voneinander sein können, die direkt miteinander verknüpft und/oder durch gleiche oder voneinander verschiedene Gruppen Y miteinander verknüpft sind und Y für einen zweiwertigen Rest aus der Gruppe

—O— , —S— , 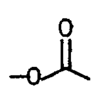 , 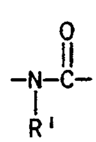 , 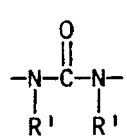 , 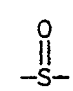 ,

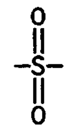 ,

und

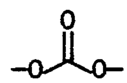

steht und
k, m die Zahlen 1 bis 10 und
l, n die Zahlen 0 bis 25 symbolisieren.

2. UV-vernetzbare Massen gemäß Anspruch 1, dadurch gekennzeichnet, daß sie als Monomere der allgemeinen Formel I einen Acrylsäure- und/oder Methacrylsäureester der Verbindung der Formel

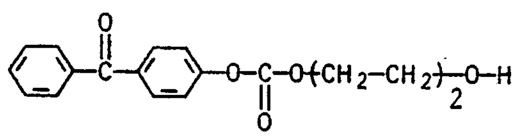

einpolymerisiert enthalten.

3. Verwendung von Massen gemäß den Ansprüchen 1 und 2 mit K-Werten von 25 bis 70 als Schmelzhaftkleber.

4. Verwendung von Massen gemäß den Ansprüchen 1 und 2 mit K-Werten von 60 bis 100 zum Beschichten von flächigen mineralischen Substraten.

5. Verwendung von Massen gemäß den Ansprüchen 1 und 2 mit K-Werten von 15 bis 85 als Lacke.

6. UV-vernetzbare Massen gemäß den Ansprüchen 1 und 2, dadurch gekennzeichnet, daß sie, bezogen auf ihr Gewicht, zusätzlich 0,1 bis 50 Gew.% eines klebrigmachenden Harzes enthalten.

7. UV-vernetzbare Massen gemäß Anspruch 6, dadurch gekennzeichnet, daß sie als klebrigmachende Harze Kolophoniumharze, Cumaron-Inden-Harze und/oder Poly-α-methylstyrol enthalten.

8. Verwendung von Massen gemäß den Ansprüchen 6 bis 7 als Schmelzhaftkleber.

**Patentansprüche für folgenden Vertragsstaat: ES**

1. Verfahren zur Herstellung von UV-vernetzbaren Massen, dadurch gekennzeichnet, daß man ein Monomerengemisch bestehend aus
   a) 0,01 bis 20 Gew.% wenigstens eines Monomeren der allgemeinen Formel I

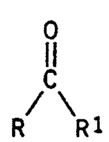 (I) ,

worin

R für einen geradkettigen Alkylrest mit 1 bis 3 Kohlenstoffatomen, einen verzweigten, gegebenenfalls substituierten Alkylrest mit 3 oder 4 Kohlenstoffatomen, für einen Arylrest oder den Rest $R^1$ steht und

$R^1$ für den Rest

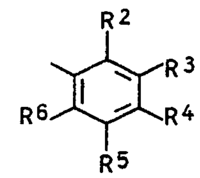

steht, wobei die Reste $R^2$ bis $R^6$ untereinander gleich oder verschieden sind und stehen für H, Alkyl mit 1 bis 4 Kohlenstoffatomen, eine nicht orthoständige OH-Gruppe, $OCH_3$, $OC_2H_5$, SH, $SCH_3$, Cl, F, CN, COOH, COO($C_1$ bis $C_3$-Alkyl), $CF_3$, $N(CH_3)_2$, $N(C_2H_5)_2$, $N(CH_3)C_6H_5$, $^{\oplus}N(CH_3)_3X^{\ominus}$, $^{\oplus}N(CH_3)_2X^{\ominus}$, mit $X^{\ominus}$ einem Säureanion wie z.B. $Cl^{\ominus}$, $Br^{\ominus}$, Acetat, $HSO_4^{\ominus}$, $H_2PO_4^{\ominus}$ und $NO_3^{\ominus}$ und mindestens einer der Reste $R^2$ bis $R^6$ für den Rest

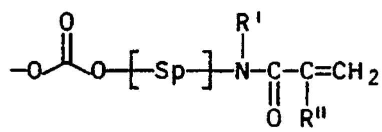

oder

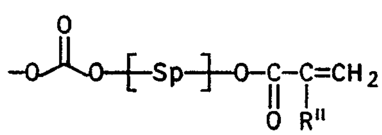

oder

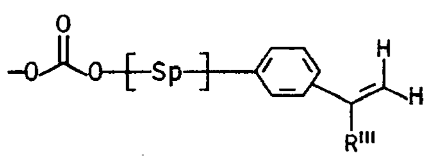

,

mit Sp für eine der Spacergruppen der folgenden Art

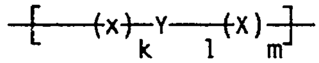

und/oder

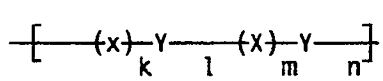

und

R' für H, $C_1$ bis $C_4$-Alkyl, Phenyl,

R'' für H, $C_1$ bis $C_4$-Alkyl,

R''' für H, $CH_3$

stehen und worin X für einen zweiwertigen, gegebenenfalls substituierten, gegebenenfalls perfluorierten Alkylenrest, für einen gegebenenfalls substituierten Cycloalkylenrest mit 5 bis 10 Kohlenstoffatomen, für einen gegebenenfalls substituierten o-, m- oder p-Phenylenrest, wobei die X-Reste gleich oder verschieden voneinander sein können, die direkt miteinander verknüpft und/oder durch gleiche oder voneinander verschiedene Gruppen Y miteinander verknüpft sind und Y für einen zweiwertigen Rest aus der Gruppe

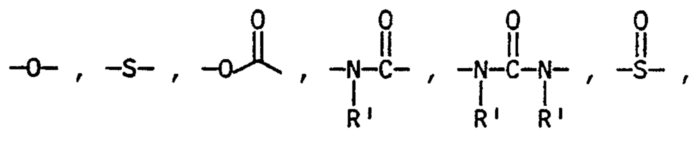

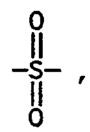

und

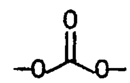

steht und

k, m die Zahlen 1 bis 10 und

l, n die Zahlen 0 bis 25 symbolisieren, und

b) 80 bis 99,99 Gew.% sonstigen copolymerisierbaren Monomeren mit der Maßgabe radikalisch polymerisiert, daß wenigstens 50 bis 99,99 Gew.% der gesamten Monomeren Ester der Acryl- und/oder Methacrylsäure mit 1 bis 24 C-Atome enthaltenden Alkanolen sind, und das Polymerisat nach beendeter Polymerisation gegebenenfalls isoliert.

**2.** Verfahren nach Anspruch 1, dadurch gekennzeichnet, daß die radikalische Polymerisation in einem Lösungsmittel mit einem Siedepunkt von 50 bis 150 °C durchgeführt und nach beendeter Polymerisation gegebenenfalls abgetrennt wird.

**3.** Verfahren nach Anspruch 1 oder 2, dadurch gekennzeichnet, daß, bezogen auf die Gesamtmenge an Monomeren, 0,01 bis 10 Gew.% an Polymerisationsinitiatoren eingesetzt werden.

**4.** Verfahren nach den Ansprüchen 1 bis 3, dadurch gekennzeichnet, daß als Monomere der allgemeinen Formel I ein Acrylsäure- und/oder Methacrylsäureester der Verbindung der Formel

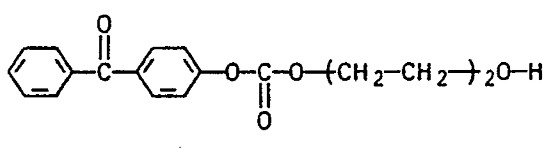

eingesetzt wird.

**5.** Verwendung der nach einem Verfahren gemäß der Ansprüche 1 bis 4 erhaltenen, einen K-Wert von 25 bis 75 aufweisenden, Verfahrensprodukte als Schmelzhaftkleber.

**6.** Verwendung der nach einem Verfahren gemäß der Ansprüche 1 bis 4 erhaltenen, einen K-Wert von 60 bis 100 aufweisenden, Verfahrensprodukte zum Beschichten von flächigen mineralischen Substraten.

7. Verwendung der nach einem Verfahren gemäß der Ansprüche 1 bis 4 erhaltenen, einen K-Wert von 15 bis 85 aufweisenden, Verfahrensprodukte als Lacke.

8. Verfahren zur Herstellung von UV-vernetzbaren Massen, dadurch gekennzeichnet, daß man in ein nach einem Verfahren gemäß der Ansprüche 1 bis 4 erhaltenes Verfahrensprodukt, bezogen auf die Endmasse, 0,1 bis 50 Gew.% eines klebrigmachenden Harzes zusetzt.

9. Verfahren nach Anspruch 8, dadurch gekennzeichnet, daß man als klebrigmachende Harze Kolophoniumharze, Cumaron-Inden-Harze und/oder Poly-α-methylolstyrol einsetzt.

10. Verwendung der nach einem Verfahren gemäß der Ansprüche 8 oder 9 erhaltenen Verfahrensprodukte als Schmelzhaftkleber.

Europäisches Patentamt

# EUROPÄISCHER RECHERCHENBERICHT

Nummer der Anmeldung

**EP 90 10 5693**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-1 551 599 (HOECHST)<br>– – – | | C 08 F 220/30<br>C 08 F 220/58 |
| A | US-A-3 575 925 (M. SKOULTCHI)<br>– – – – – | | |
| | | | **RECHERCHIERTE SACHGEBIETE (Int. Cl.5)** |
| | | | C 08 F |

Der vorliegende Recherchenbericht wurde für alle Patentansprüche erstellt

| Recherchenort | Abschlußdatum der Recherche | Prüfer |
|---|---|---|
| Den Haag | 12 Dezember 90 | CAUWENBERG C.L.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument